# EUROPÄISCHE PATENTSCHRIFT

(11) **EP 4 073 860 B1**
(45) Veröffentlichungstag und Bekanntmachung des Hinweises auf die Patenterteilung: **19.03.2025**
(21) Anmeldenummer: 20833720.4
(22) Anmeldetag: 09.12.2020
(51) Int. Cl.: H01M 8/04007

(54) **FESTOXIDZELLENANORDNUNG**
SOLID OXIDE FUEL CELL ARRANGEMENT
AGENCEMENT DE PILE À COMBUSTIBLE À OXYDE SOLIDE

(30) Priorität: 10.12.2019 EP 19214778
(43) Veröffentlichungstag der Anmeldung: 19.10.2022
(73) Patentinhaber: Sunfire GmbH, 01237 Dresden (DE)
(72) Erfinder: SCHIMANKE, Danilo, 01099 Dresden (DE); MEISEL, Peter, 01099 Dresden (DE)
(74) Vertreter: Hauck Patentanwaltspartnerschaft mbB
(86) Internationale Anmeldenummer: PCT/DE2020/101043
(87) Internationale Veröffentlichungsnummer: WO 2021/115538

(56) Entgegenhaltungen:
- EP-A1- 2 476 783
- EP-A2- 1 271 684
- WO-A1-2012/131163
- US-A1- 2007 119 638

## Beschreibung

Die Erfindung betrifft eine Festoxidzellenanordnung mit einem Gehäuse, wobei das Gehäuse eine Bodenplatte, eine Abdeckung und Seitenwände aufweist, und Festoxidzellstapeln, wobei sich die Festoxidzellstapel auf der Bodenplatte befinden.

Festoxidzellenanordnungen (SOC) können sowohl Hochtemperaturbrennstoffzellenanordnungen (SOFC) als auch Hochtemperaturelektrolysezellenanordnungen (SOEC) umfassen.

Bei der Nutzung von Hochtemperaturbrennstoffzellenanordnungen werden verschiedene flüssige und gasförmige Brennstoffe auf Kohlenwasserstoffbasis (Erdgas, LPG) in Strom und Wärme umgewandelt. Bei Hochtemperaturelektrolysezellenanordnungen wird elektrische Energie in chemische Energie gewandelt.

Eine Festoxidzellenanordnung enthält als zentrale Einheit zumindest einen Festoxidzellstapel, in dem bei der Nutzung als Hochtemperaturbrennstoffzellenanordnung an einer H2-Elektrodenseite des Festoxidzellstapels zugeführter gasförmiger Brennstoff auf Kohlenwasserstoffbasis oder Wasserstoff mit an einer O2-Elektrodenseite zugeführter Luft umgesetzt wird; bei der Nutzung als Hochtemperaturelektrolysezellenanordnung wird an einer H2-Elektrodenseite des Festoxidzellstapels zugeführter Wasserdampf und / oder Kohlenstoffdioxid zu Sauerstoff und Wasserstoff beziehungsweise Kohlenstoffmonoxid umgesetzt.

Die Betriebstemperatur von Festoxidzellenanordnungen liegt üblicherweise materialbedingt bei Temperaturen von 700 bis 900 °C. Beim Aufheizen von Raumtemperatur muss Wärme über Leitungen, Konvektion oder Strahlung in die Festoxidzellstapel transportiert werden.

Aus dem **Stand der Technik** sind unterschiedliche Anordnungen bekannt, um Festoxid-Brennstoffzellen zu betreiben.

Die Zellstapel können in den Hochtemperaturbrennstoffzellenanordnungen sowohl reihenförmig als auch ring- beziehungsweise kreisförmig angeordnet werden.

Eine lineare Anordnung ist beispielsweise aus der Druckschrift WO 2017/191353 A1 bekannt, aus der eine Stapelanordnung eines Hochtemperatur-Brennstoffzellensystems oder Elektrolysezellensystems offenbart ist, wobei jede Zelle im Zellensystem eine H2-Elektrodenseite, eine O2-Elektrodenseite und einen dazwischenliegenden Elektrolyten umfasst, wobei das Zellensystem die Zellen in Zellstapeln umfasst. Die Anordnung umfasst die in Reihenanordnung angeordneten Stapel, wobei die Stapel mindestens in zwei Reihen nebeneinander angeordnet sind, und die Anordnung Lufteinführungskanäle zum Zuführen von Luft zu den Stapeln umfasst, wobei die Kanäle Lufteintrittsenden aufweisen, die zu einem abgedichteten Lufteinführungsraum gefördert werden, der zwischen den Stapelreihen mit mindestens zwei Seiten des von den Stapeln selbst umschlossenen Lufteinführungsraums gebildet ist.

Aus den Druckschriften US 7,659,022 B2, WO 2015/118208 A1 und DE 42 17 892 C2 sind Zellstapel in radialer Anordnung bekannt.

Die US 7,659,022 B2 beschreibt eine integrierte Brennstoffzelleneinheit, wobei diese eine ringförmige Anordnung von Brennstoffzellenstapeln, einen ringförmigen Kathodenrekuperator, einen ringförmigen Anodenrekuperator, einen Reformer und einen Anodenabgaskühler, die alle in eine gemeinsame Gehäusestruktur integriert sind, beinhaltet.

Die WO 2015/118208 A1 offenbart eine Montageanordnung von Festoxidzellen in einem Brennstoffzellensystem oder in einem Elektrolysezellensystem. Die Baugruppe umfasst die Zellen, die mindestens bis zu vier abgewinkelte mindestens eine Zellstapelbildung und mindestens eine im Wesentlichen ebene Befestigungsseite jeder mindestens vier abgewinkelten Stapelbildung angeordnet sind, wobei die Seite mindestens eine geometrisch abweichende Befestigungsflächenstruktur in der ansonsten im Wesentlichen ebenen Seite zwischen mindestens zwei Ecken der mindestens vier abgewinkelten Stapelbildung umfasst. Die Montageanordnung umfasst ferner mindestens eine Strömungsbegrenzungsstruktur zum Begrenzen von Luftströmen in dem zu montierenden Zellsystem gegen die geometrisch abweichende Befestigungsflächenstruktur jeder Stapelformation zum Befestigen mindestens einer Zellstapelformation in der Montageanordnung, und eine elektrische Isolierung, die zur Befestigung der Strömungsbegrenzungsstruktur und der Stapelformation angeordnet ist.

Die DE 42 17 892 C2 beschreibt eine Energieerzeugungseinheit aufweisend ein Energieversorgungsmodul mit einem wärmeisolierenden Behälter, der intern unterteilt ist, um eine Stapelkammer, eine Brennkammer und eine Wärmetauscherkammer bereitzustellen. Die Stapelkammer enthält mindestens einen Brennstoffzellenstapel. Die einzelnen Zellen werden entsprechend versorgt, wobei die zugeführten Medien jeweils über den Wärmetauscher in der Wärmetauscherkammer erwärmt werden. Die von den Brennstoffzellen zugeführte Gleichspannung wird über einen Stromregler mit einer Steuervorrichtung, die die gesamte Erzeugung des Energieversorgungsmoduls regelt, in Wechselstrom umgewandelt.

An die Zellstapelanordnungen werden zur Temperaturregelung verfahrenstechnische Komponenten wie elektrische Gasvorheizer oder Wärmetauscher positioniert. Die Wärmeübertragung findet über Konvektion oder Wärmeleitung statt.

Aus der WO 2012/131163 A1 ist eine Heizungsanordnung für einen Brennstoffzellvorrichtung bestehend aus einem Strahlungsheizer und einem Konvektionsheizer bekannt geworden, wobei der Strahlungsheizer außerhalb einer Brennstoffzellenanordnung und der Konvektionsheizer innerhalb der Brennstoffzellenanordnung vorgesehen ist. Die Kombination zweier Arten der Heizung soll eine gleichmäßige Wärmeverteilung sowie ein schnelles Aufheizen bei gleichzeitiger Vermeidung von thermischem Stress ermöglichen.

Aus der US 2007/119638 A1 ist ein Brennstoffzellensystem umfassend mindestens einem elektrisches Widerstandsheizelement bekannt geworden. Mehrere Widerstandsheizelemente können dabei so verteilt sein, um eine gleichmäßige Wärmeverteilung herzustellen.

Aus der EP 1 271 684 A2 ist ein Brennstoffzellensystem umfassend einen Zellstapel bekannt geworden, wobei die einzelnen Zellen des Zellstapels einen mit dem elektrochemischen Teil der Zellen in thermischen Kontakt stehenden Interconnect aufweisen, über welchen diesen Wärme zugeführt werden kann. Nachteilig an der Verwendung von Interconnects ist deren arbeits-, zeit- und kostenintensive Kontaktierung. Auch verhindern Interconnects eine Wartung/Reparatur von Stacks, beispielsweise in dem Fall, dass einer der Interconnects defekt ist und getauscht werden soll. Ebenso ist für die im Stack angeordneten Interconnects jeweils eine galvanische Trennung von Elektrolyse und Heizelement erforderlich, was ebenfalls die Herstellungskosten erhöht.

EP247783 offenbart Strahlungsheizelemente für eine Elektrolyseanlage zur Herstellung von Fluoriden.

Die **Probleme im Stand der Technik** sind im Wesentlichen, dass zum Betrieb der Festoxidzellenanordnung Temperaturen von üblicherweise (derzeit im Stand der Technik üblich) 700 bis 900 °C notwendig sind. Das Aufheizen erfolgt hierbei Festoxid-Elektrolysezellenanordnungen (SOEC und rSOC) über elektrische Vorheizer.

Über elektrische Vorheizer werden die Medien konvektiv aufgeheizt und diese Heißgase erwärmen wiederum den Festoxidzellenstapel. Das Aufheizen durch bewegte Fluide führt zwangsläufig zu Wärmeverlusten, selbst wenn eine bestmögliche Wärmerückgewinnung erreicht wird. Die austretenden Gase haben immer eine höhere Temperatur als beim Eintritt in den jeweiligen Bilanzraum. Dadurch wird beispielsweise unnötig viel Energie beim Aufheizen verwendet.

Zudem können einige Materialien in elektrischen Vorheizern bei bestimmten, meist wasserdampfhaltigen Atmosphären und im Hochtemperaturbereich Kontaminanten emittieren, welche die Leistungsfähigkeit der Festoxidzellenanordnungen negativ beeinflussen.

Auch sind elektrische Vorheizer verhältnismäßig teure Baugruppen.

Zudem werden sie zwischen Zellstapel und Wärmeübertrager integriert und verlängern dadurch die Rohrleitungen, was eine Erhöhung der Wärmeverluste bedingt.

Aufgrund der höheren Medientemperatur müssen die Rohrleitungen größer ausgelegt werden. Des Weiteren sind im Aggregat größere Bereiche bei hohen Temperaturen, wodurch andere Funktionen negativ beeinflusst werden, z.B. galvanische Trennung, Sensorik, Leistungsanschlüsse, und bei einigen Konstruktionsvarianten Wärmeverluste höher ausfallen. So werden beispielsweise die Wärmeverluste erhöht, wenn Heißgase an Außenwänden entlanggeführt werden.

Auch ist eine gute Zugänglichkeit zu den einzelnen Bauteilen für Instandhaltungsarbeiten, wie beispielsweise der Durchführung einer Wartung, oftmals nicht gegeben.

Der vorliegenden Erfindung liegt die **Aufgabe** zugrunde, eine Anordnung zum effizienten Aufheizen und Betrieb von Hochtemperatur-Festoxidzellenanordnungen bereitzustellen.

Die Komplexität und Bauteilanzahl einer Baugruppe bestimmt wesentlich die Kosten. Bei Anwendungen mit wenigen Kaltstarts pro Jahr, ist eine aufwändige Infrastruktur zum Aufheizen möglichst zu vermeiden. Mit möglichst nur einer wärmeerzeugenden Baugruppe sollen sowohl Festoxidzellstapel als auch Medienströme auf H2- und O2-Seite in die notwendigen Temperaturbereiche aufgeheizt werden.

**Gelöst** wird diese Aufgabe mit einer Festoxidzellenanordnung gemäß Hauptanspruch sowie weiteren vorteilhaften Ausgestaltungsvarianten gemäß der Unteransprüche.

Die Festoxidzellenanordnung ist mit einem Gehäuse, Festoxidzellstapeln und wenigstens einem Strahlungsheizungselement innerhalb des Gehäuses ausgebildet, über welches Strahlungswärme auf die Festoxidzellstapel abgegeben wird. Hierdurch sind keine elektrischen Vorheizer zur Erwärmung der Festoxidzellstapel mehr notwendig. Die erzwungene Konvektion zum Aufheizen entfällt somit und das Aufheizen ist deutlich effizienter. Bis zu 90 % der investierten Elektroenergie zur Temperaturerhöhung der Zellstapel anstatt von bisher nur etwa 40 % werden effizient genutzt. Dies führt zu einer Einsparung von mindestens 50 % der investierten Elektroenergie (kWh) beim Aufheizen. Die Wärmeverluste fallen zudem deutlich geringer aus, da deutlich weniger austretende Gase mit einer höheren Temperatur als die Umgebung vorliegen.

Dadurch, dass das Strahlungsheizungselement als Heizrohr oder als Heizplatte ausgebildet ist, wobei dieses hängend von oben und / oder an Seitenwänden befestigt und / oder stehend auf der Bodenplatte oder in keramische Platten integriert sein kann, ist es möglich das Strahlungsheizungselement auf den Einzelfall zugeschnitten so auszubilden und zu montieren, dass ein bestmögliches Ergebnis, also ein effizientes Aufheizen, ermöglicht wird. Auch die Möglichkeit einer einfachen Wartung wird so gegeben. Sind die Strahlungsheizungselemente beispielsweise in einer Seitenwand integriert, so ist durch Abnahme oder Wegklappen der Seitenwand eine Zugänglichkeit sowohl zu den Strahlungsheizungselementen als auch den Festoxidzellstapeln gegeben.

Dadurch, dass das Strahlungsheizungselement aus mehreren separat regelbaren Segmenten mit separaten Leistungsanschlüssen für die jeweiligen Strahlungsheizungssegmente besteht, wird es möglich thermische Ungleichgewichte durch lokale thermische Beeinflussung zu vermeiden. Grundlage für diesen Ansatz ist der physikalische Zusammenhang, dass bei höheren Temperaturen der Innenwiderstand der keramischen Zellen sinkt. Zusätzlich gilt die Gesetzmäßigkeit, dass die elektrische Verlustleistung (= Abwärme) durch die Stromdichte quadratische und durch den Innenwiderstand linear beeinflusst wird (P_{Loss} = RI²). Außerdem gilt, dass in elektrischen Parallelschaltungen in Verzweigungen mit geringerem Innenwiderstand höhere Stromstärken anliegen. Auf Basis dieser Zusammenhänge können beispielsweise sowohl einzelne Festoxidzellreihenschaltungen eines elektrischen Netzwerkes (mittels Strahlungsheizungselementen) als auch Teile einer Festoxidreihenschaltung (mittels Strahlungsheizungssegmenten) je nach Bedarf / Betriebsart positiv beeinflusst werden. Hier ist eingrenzend zu erwähnen, dass durch die thermische Einflussnahme das vorherrschende Materialverhalten (Degradation) nicht verändert werden kann, aber deren Symptome deutlich abgeschwächt werden können.

Jede Festoxidzellstapelreihenschaltung wird global regelbar über die Stromdichte und Zuschaltung der zugehörigen Strahlungsheizung.

Durch einen lokal unterschiedlichen Wärmeeintrag kann eine lokal regelbare Festoxidzellstapelreihenschaltung aufgewertet werden. Dazu kann der gesamte Heizleiter in Segmente unterteilt werden und jeweils einen Leistungsanschluss erhalten, wodurch die Leistungsfähigkeit des Festoxidstapels gesteigert werden kann. Grundsätzlich ist zu erwähnen, dass in einer Reihenschaltung "das schwächste Glied" limitiert. Unterliegt beispielsweise im SOEC-Betrieb ein Bereich höheren Wärmeverlusten, so steigt dort die Spannung bis zum zulässigen Maximalwert. Die Stromstärke wird für die gesamte Reihenschaltung limitiert und damit die H2-Produktion. Die wärmeren Bereiche werden nicht optimal ausgenutzt. Mit einer segmentierten Heizung können die kühleren Bereiche gezielt nachgeheizt werden und so die Temperatur des Festoxidzellstapels homogenisiert werden. Die Stromstärke respektive die H2-Produktion kann erhöht werden, da die kalten Zellen nicht mehr limitieren.

Da die Festoxidzellstapel in mehreren Reihen nebeneinander als Festoxidzellstapelreihenschaltung vorliegen können, wobei jedem Festoxidzellstapel ein Strahlungsheizungselement zugeordnet sein kann, wird die Effizienz des Aufheizens der Festoxidstapel weiter verbessert. Die Festoxidzellstapel können so über ihre gesamte Fläche über die Strahlungsheizungselemente aufgeheizt werden. Die von den Strahlungsheizungselementen abgegebene Wärme wird gleichmäßig verteilt, da jeder Festoxidzellstapel über die Strahlungsheizungselemente aufgeheizt wird und keine ungeheizten Abschnitte vorliegen. Dies trägt zudem zu einer verlängerten Lebensdauer bei.

Wenn zusätzlich zu den Strahlungsheizungselementen Wärmeübertrager für die Medienzufuhr im Gehäuse oder außerhalb an den Flanschen angeordnet sind, wird die Prozesswärme im System gehalten. Die Wärme der austretenden Gase wird bestmöglich zum Vorwärmen der eintretenden Gase genutzt. Dies führt zu einer Steigerung des Systemwirkungsgrades. Die bisher eingesetzten elektrischen Vorheizer können entfallen. Es sind mindestens zwei Wärmeübertrager, je einer für O2- und H2-Elektrodenseite, erforderlich. Die Nutzung der Enthalpieströme der austretenden Gase ist somit von besonderer Bedeutung für die Profitabilität eines Systems.

In einigen Anwendungsfällen ist daher die Integration von mehr als zwei Wärmeübertragern sinnvoll. Unter Betrachtung der nutzungsabhängigen Ausgestaltung sind verschiedene Möglichkeiten gegeben. Diese umfassen beispielsweise:
- Wärmeübertrager mit gleichem Medium auf beiden Wärmeübertragerseiten oder als Mischung von H2- und O2-Seite;
- dezentrale Anordnung vieler kleiner Wärmeübertrager oder die zentrale Anordnung von größeren Wärmeübertragern;
- Parallelschaltung oder Reihenschaltung mehrerer Wärmeübertrager.

Relevant ist in diesem Zusammenhang die Kombination von Wärmeübertragern mit Strahlungsheizungselementen. Aus obigen Möglichkeiten kann eine Vielzahl von Varianten abgeleitet werden. Diese sind beispielsweise:
- Wärmeübertrager auf H2-Seite direkt unter den einzelnen Türmen der Zellstapelreihenschaltung positioniert (dezentrale Anordnung auf H2-Seite);
- Medienstrang O2-Seite wird zweistufig abgekühlt, zunächst mittels Wärmeübertrager auf O2-Seite und dann mittels Wärmeübertrager auf H2-Seite;
- Medienstrang O2-Seite wird aufgesplittet, so dass ein Teil des Massestroms die H2- und ein anderer die O2-Seite vorwärmt;
- Medienzufuhr O2-Seite von der Heizer zugewandten Festoxidzellstapelseite;
- Medienversorgung O2-Seite über separate metallische oder metall-keramische Baugruppen im Grundträger.

Nachfolgend werden Ausführungsbeispiele der Erfindung anhand der beiliegenden Zeichnungen in der **Abbildungsbeschreibung** detailliert beschrieben, wobei diese die Erfindung erläutern soll und nicht beschränkend zu werten ist:

Es zeigen:
- Abb. 1: eine schematische Darstellung einer Festoxidzellenanordnung mit einem Festoxidzellstapel und einem seitlichen Strahlungsheizungselement in der Draufsicht;
- Abb. 2: eine schematische Darstellung einer Festoxidzellenanordnung mit zwei Festoxidzellstapeln und zwei seitlichen Strahlungsheizungselementen in der Draufsicht;
- Abb. 3: eine schematische Darstellung einer Festoxidzellenanordnung mit zwei Festoxidzellstapeln und drei sowohl seitlichen als auch mittigen Strahlungsheizungselementen in der Draufsicht;
- Abb. 4: eine schematische Darstellung einer Festoxidzellenanordnung mit drei Festoxidzellstapeln und drei sowohl seitlichen als auch mittigen Strahlungsheizungselementen in der Draufsicht;
- Abb. 5: eine schematische Darstellung einer Festoxidzellenanordnung mit vier Festoxidzellstapeln mit Durchströmung von je zwei Zellstapeln und zwei seitlichen Strahlungsheizungselementen in der Draufsicht;
- Abb. 6: ein Fließbild einer Festoxidzellenanordnung mit einem Festoxidzellstapel und einem Strahlungsheizungselement in Kombination mit zwei Wärmeübertragern;
- Abb. 7: ein Fließbild einer weiteren Ausgestaltung einer Festoxidzellenanordnung mit einem Festoxidzellstapel und einem Strahlungsheizungselement in Kombination mit zwei Wärmeübertragern;
- Abb. 8: ein Fließbild einer Festoxidzellenanordnung mit einem Festoxidzellstapel, einem Strahlungsheizungselement in Kombination mit zwei Wärmeübertragern und einem zusätzlichen konvektiven, elektrischen Gasheizer auf H2-Medienseite;
- Abb. 9: ein Fließbild einer Festoxidzellenanordnung mit einem Festoxidzellstapel und einem Strahlungsheizungselement in Kombination mit drei Wärmeübertragern;
- Abb. 10: ein Fließbild einer Festoxidzellenanordnung mit einem Festoxidzellstapel und einem Strahlungsheizungselement in Kombination mit drei Wärmeübertragern und einem aufgeteilten Abluftstrom;
- Abb. 11: einen Vergleich einer Festoxidzellenanordnung mit einem Strahlungsheizungselement, zentral angeordneten Wärmeübertragern und einem elektrischen Vorheizer mit einer Anordnung mit konventionellen, elektrischen Vorheizern und zentral angeordneten Wärmeübertragern anhand zweier Fließbilder (a, b);
- Abb. 12: einen Vergleich einer Festoxidzellenanordnung mit separaten Strahlungsheizungselementen, dezentralen Wärmeübertragern und einem elektrischen Vorheizer mit einer Anordnung mit konventionellen, elektrischen Vorheizern und dezentralen Wärmeübertragern anhand zweier Fließbilder (a, b) und
- Abb. 13: eine schematische Darstellung einer Festoxidzellenanordnung mit einem Festoxidzellstapel und einem seitlichen Strahlungsheizungselement aufgeteilt in Strahlungsheizungssegmente in der Draufsicht.

In den nachfolgenden Abbildungsbeschreibungen sind funktionsgleiche Bauteile mit einheitlichen Bezugszeichen versehen.

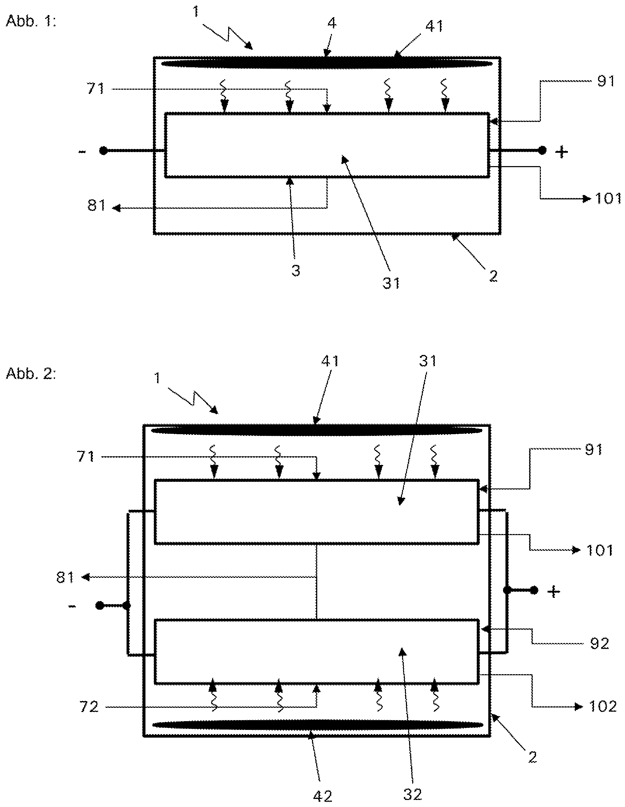

In Abb. 1 ist eine Festoxidzellenanordnung 1 in einem Gehäuse 2 dargestellt. Die Festoxidzellenanordnung 1 besteht aus einem Festoxidzellstapel 31 mit einem seitlich an dem Gehäuse 2 angebrachten Strahlungsheizungselement 41.

Das Strahlungsheizungselement 41, das seitlich an das Gehäuse 2 angebracht ist, dient zur Aufheizung des Festoxidzellstapels 31. Durch die seitliche Anbringung ist eine gute Zugänglichkeit zu dem Festoxidzellstapel 31 und / oder zu dem Strahlungsheizungselement 41 gegeben. Das Strahlungsheizungselement 41 kann als Heizrohr oder als Heizplatte ausgebildet sein, wobei dieses hängend von oben und / oder an Seitenwänden befestigt und / oder stehend auf der Bodenplatte oder in keramische Platten integriert sein kann.

Luft gelangt über die Medienzufuhr auf der O2 -Elektrodenseite 71 in den Festoxidzellstapel 31. Die verbrauchte Luft wird über die Medienabfuhr auf der O2-Elektrodenseite 81 abgeführt. Das Brenngas wird über die Medienzufuhr auf der H2-Elektrodenseite 91 zugeführt. Überschüssiges Brenngas und Wasser werden über die Medienabfuhr auf der H2-Elektrodenseite 101 abgeführt.

In **Abb.** 2 liegen zwei Festoxidzellstapel 31, 32 als Festoxidzellstapelreihenschaltung vor. Es werden zwei jeweils seitlich angebrachte Strahlungsheizungselemente 41, 42 verwendet. Es gibt pro Zellstapel 31, 32 jeweils eine Medienzufuhr auf der O2-Elektrodenseite 71, 72 und der H2-Elektrodenseite 91, 92. Die Medienabfuhr auf der O2-Elektrodenseite 81 erfolgt in einem Strang; die Medienabfuhr auf der H2-Elektrodenseite 101, 102 erfolgt jeweils separat.

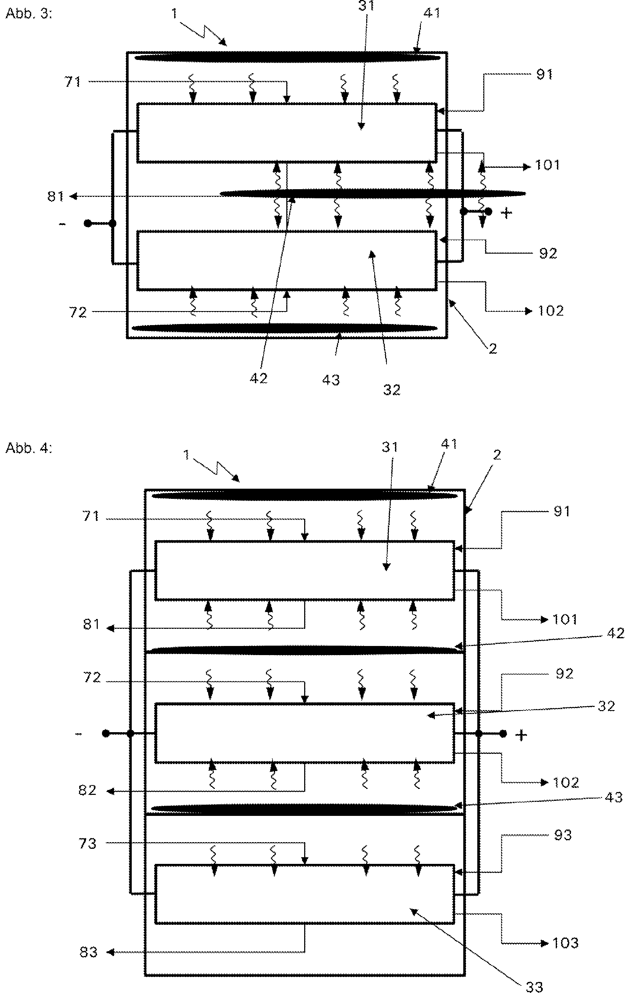

**Abb.** 3 unterscheidet sich von Abb. 2 dadurch, dass es neben den zwei seitlich angebrachten Strahlungsheizungselementen 41, 43 noch ein mittig angebrachtes Strahlungsheizungselement 42 gibt.

In **Abb.** 4 sind drei Festoxidzellstapel 31, 32, 33 miteinander verschaltet. Es gibt ein seitlich am Gehäuse 2 angebrachtes Strahlungsheizungselement 41 und zwei mittig installierte Strahlungsheizungselemente 42, 43. Medienzufuhr und -abfuhr erfolgen pro Zellstapel separat.

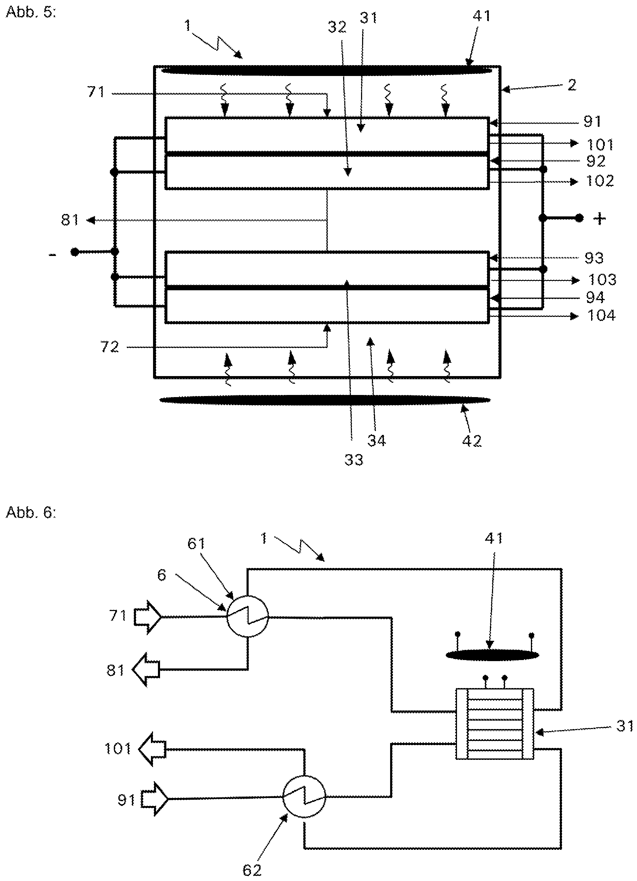

In **Abb.** 5 werden je zwei Zellstapel 3 gemeinsam durchströmt. Die Zellstapel 31, 32 sowie die Zellstapel 33, 34 haben jeweils eine Medienzufuhr auf der O2-Elektrodenseite 71, 72 und eine gemeinsame Medienabfuhr auf der O2-Elektrodenseite 81. Die Medienzufuhr und -abfuhr auf der H2-Elektrodenseite erfolgen jeweils separat pro Zellstapel. Es gibt zwei seitlich angebrachte Strahlungsheizungselement 41, 42.

Wie in den obigen Ausführungsbeispielen zur Anordnung von Strahlungsheizungselementen 4 in Festoxidzellenanordnungen 1 beschrieben, kann jedem Festoxidzellstapel 3 ein Strahlungsheizungselement 4 zugeordnet sein. In solch einem Fall können einzelne Strahlungsheizungselemente 4 entweder mittig zwischen den einzelnen Reihen an Festoxidzellstapeln 3 installiert werden und / oder wie zuvor beschrieben seitlich angebracht sein. Die Festoxidzellstapel 3 können so über ihre gesamte Fläche über die Strahlungsheizungselemente 4 aufgeheizt werden. Da die Strahlungsheizungselemente 4 aus mehreren separat regelbaren Segmenten mit separaten Leistungsanschlüssen für die jeweiligen Strahlungsheizungssegmente bestehen können, können thermische Ungleichgewichte vermieden werden.

In den **Abb. 6-10** sind Fließbilder einer Festoxidzellenanordnung 1 dargestellt. In den Fließbildern werden verschiedene Möglichkeiten der Kombination von Strahlungsheizungselement 4 mit Wärmetauscher 6 aufgezeigt.

In Abb. 6 ist ein Strahlungsheizungselement 41 mit zwei Wärmeübertragern 61, 62 in einer Festoxidzellenanordnung 1 kombiniert. Ein Festoxidzellstapel 31 wird über das Strahlungsheizungselement 41 erwärmt. Es sind Wärmeübertrager auf der O2-Elektrodenseite 61 und ein Wärmeübertrager auf der H2-Elektrodenseite 62 installiert. Luft gelangt über die Medienzufuhr auf der O2 -Elektrodenseite 71 in den Festoxidzellstapel 31. Die verbrauchte Luft wird über die Medienabfuhr auf der O2-Elektrodenseite 81 abgeführt. Das Brenngas wird über die Medienzufuhr auf der H2-Elektrodenseite 91 zugeführt. Überschüssiges Brenngas und Wasser werden über die Medienabfuhr auf der H2-Elektrodenseite 101 abgeführt.

Mit dem Wärmeübertrager auf der O2-Elektrodenseite 61 wird die Medienzufuhr auf der O2 - Elektrodenseite 71 über die Medienabfuhr auf der O2-Elektrodenseite 81 erwärmt. Dementsprechend wird mit dem Wärmeübertrager auf der H2-Elektrodenseite 62 die Medienzufuhr auf der H2-Elektrodenseite 91 über die Medienabfuhr auf der H2-Elektrodenseite 101 aufgewärmt. Dies erhöht den Systemwirkungsgrad.

Die Wärmeübertrager 61, 62 können entweder direkt im Gehäuse 2 unter dem Festoxidzellstapel 31 oder seitlich angeflanscht an die Ein- und Ausgänge des Gehäuses 2 angebracht werden. Durch die Unterbringung der Wärmeübertrager 61, 62 direkt im Gehäuse 2 werden die Wärmeverluste minimiert. Die Rohrleitungen sind möglichst kurz und alle Elemente sind in dem Gehäuse 2, welches wärmegedämmt ist, in einer Baugruppe untergebracht.

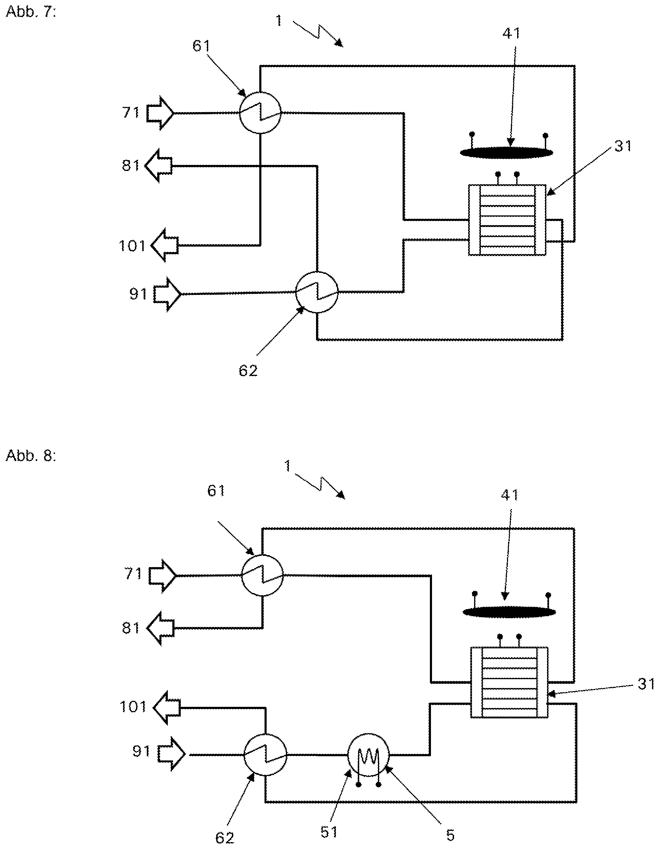

In **Abb. 7** ist wie in Abb. 6 ein Strahlungsheizungselement 41 mit zwei Wärmeübertragern 61, 62 in einer Festoxidzellenanordnung 1 kombiniert. Ein Festoxidzellstapel 31 wird über das Strahlungsheizungselement 41 erwärmt. Lediglich die Medienstromführung durch die Wärmeübertrager 61, 62 wurde variiert.

In **Abb. 8** liegt eine Festoxidzellenanordnung 1 vor, in der auf der Seite der Medienzufuhr auf der H2-Elektrodenseite 91 ein zusätzlicher konvektiver, elektrischer Gasheizer 51 installiert wurde.

Die Installation solch eines konvektiven, elektrischen Gasheizers 5 ist bei allen Varianten der Kombination von Strahlungsheizungselementen 4 mit Wärmeübertragern 3 möglich, sollte gemäß der neuartigen Festoxidzellenanordnung 1 jedoch nicht mehr zwingend notwendig sein.

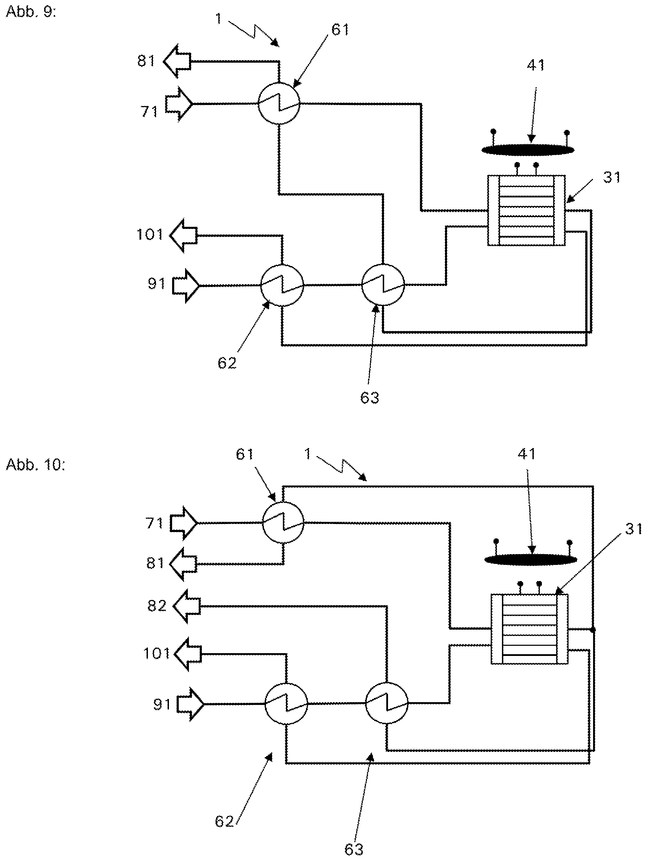

In **Abb. 9** ist ein Strahlungsheizungselement 41 mit drei Wärmeübertragern 61, 62, 63 kombiniert. Die Medienabfuhr der O2-Elektrodenseite 81 durchläuft zwei Wärmeübertrager 61, 62 und heizt somit sowohl die Medienzufuhr auf der O2-Eleltrodenseite 71 als auch die Medienzufuhr auf der H2-Elektrodenseite 91 auf.

In **Abb. 10** ist wie in Abb. 9 ein Strahlungsheizungselement 41 mit drei Wärmeübertragern 61, 62, 63 kombiniert. Zusätzlich wurde hier der O2-Abluftstrom, der aus dem Festoxidzellstapel 31 herausgeleitet wird, in zwei Teilströme aufgeteilt.

Bei der Kombination von Strahlungsheizungselementen 4 mit Wärmeübertragern 6 in Festoxidzellenanordnungen 1 ist eine Vielzahl von weiteren Varianten möglich. Sowohl die Anzahl und Position an Strahlungsheizungselementen 4 zur Aufheizung der Festoxidzellstapel 3 als auch die Anzahl und Position an Wärmeübertragern 6 sowie zusätzlich die Medienzufuhr- und -abfuhr auf den Elektrodenseiten können variiert, im Fall der Medienzufuhr und -abfuhr beispielsweise aufgesplittet, werden.

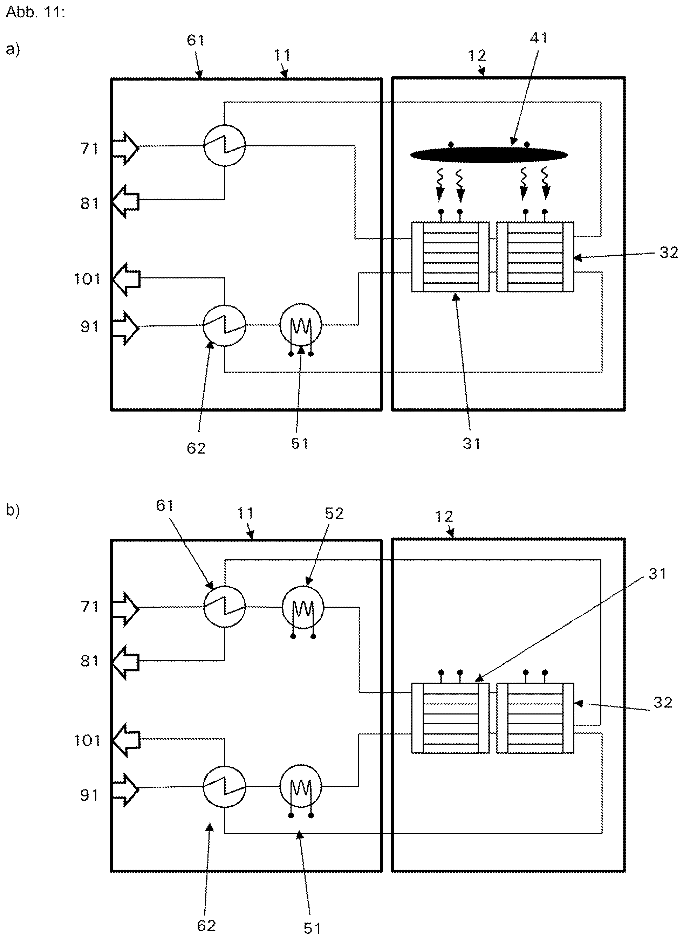

**Abb. 11** besteht aus einem Fließbild a) einer Festoxidzellenanordnung mit einem Strahlungsheizungselement 41, zentral in der Gasverarbeitungseinheit 11 angeordneten Wärmeübertragern 61, 62 und einem elektrischen Vorheizer 51 und einem Fließbild b) einer Anordnung nur mit konventionellen, elektrischen Vorheizern 51, 52 und zentral in der Gasverarbeitungseinheit 11 angeordneten Wärmeübertragern 61, 62.

Aus den beiden Fließbildern ist ersichtbar wie sich der technische Anlagenaufbau für den Betrieb von Festoxidzellen bei Anwendung von Strahlungsheizungselementen 4 bei zentraler Anordnung der Wärmeübertrager 6 verändert.

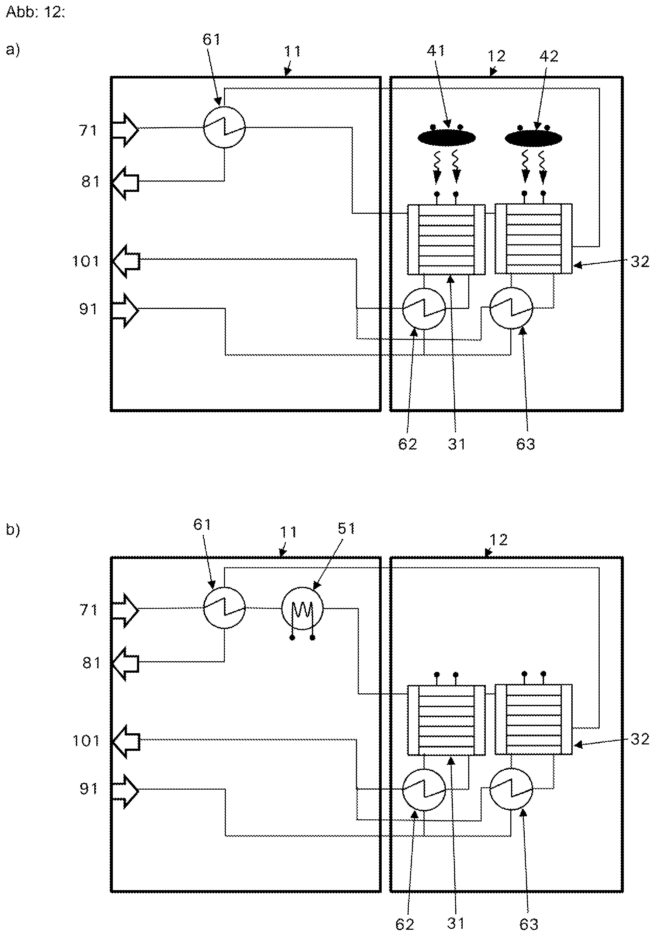

**Abb. 12** besteht aus einem Fließbild a) einer Festoxidzellenanordnung 1 mit zwei separaten Strahlungsheizungselementen 41, 42, dezentral im Zellenstapelmodul 12 angeordneten Wärmeübertragern 61, 62 und einem elektrischen Vorheizer 51 und einem Fließbild b) einer Anordnung nur mit konventionellen, elektrischen Vorheizern 51, 52 und dezentral im Zellenstapelmodul 12 angeordneten Wärmeübertragern 61, 62.

Aus den beiden Fließbildern ist ersichtbar wie sich der technische Anlagenaufbau für den Betrieb von Festoxidzellen bei Anwendung von Strahlungsheizungselementen 4 bei dezentraler Anordnung der Wärmeübertrager 6 verändert.

Aus dem Vergleich der Abbildungen 11 und 12 sind die Unterschiede des technischen Anlagenaufbaus für den Betrieb von Festoxidzellen bei zentraler und dezentraler Anordnung der Wärmeübertrager 6 ersichtlich.

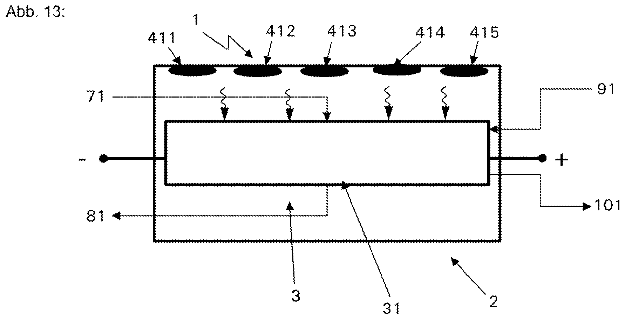

In **Abb. 13** ist eine Festoxidzellenanordnung 1 gemäß Abbildung 1 dargestellt. Das Strahlungsheizungselement 41 besteht hier aus mehreren Strahlungsheizungssegmenten 411, 412, 413, 414, 415.

### Bezugszeichenliste

| | | | |
|---|---|---|---|
| 1 | Festoxidzellenanordnung | 71 | Medienzufuhr O2-Elektrodenseite 1 |
| | | 72 | Medienzufuhr O2-Elektrodenseite 2 |
| 2 | Gehäuse | 73 | Medienzufuhr O2-Elektrodenseite 3 |
| 3 | Festoxidzellstapel | 81 | Medienabfuhr O2-Elektrodenseite 1 |
| 31 | Festoxidzellstapel 1 | 82 | Medienabfuhr O2-Elektrodenseite 2 |
| 32 | Festoxidzellstapel 2 | 83 | Medienabfuhr O2-Elektrodenseite 3 |
| 33 | Festoxidzellstapel 3 | | |
| 34 | Festoxidzellstapel 4 | 91 | Medienzufuhr H2-Elektrodenseite 1 |
| | | 92 | Medienzufuhr H2-Elektrodenseite 2 |
| 4 | Strahlungsheizungselement | 93 | Medienzufuhr H2-Elektrodenseite 3 |
| 41 | Strahlungsheizungselement 1 | | |
| 411 | Segment 1 von Strahlungsheizungselement 1 | 101 | Medienabfuhr H2-Elektrodenseite 1 |
| | | 102 | Medienabfuhr H2-Elektrodenseite 2 |
| 412 | Segment 2 von Strahlungsheizungselement 1 | 103 | Medienabfuhr H2-Elektrodenseite 3 |
| 413 | Segment 3 von Strahlungsheizungselement 1 | 11 | Gasverarbeitungseinheit |
| 414 | Segment 4 von Strahlungsheizungselement 1 | 12 | Zellenstapelmodul |
| 415 | Segment 5 von Strahlungsheizungselement 1 | | |
| 42 | Strahlungsheizungselement 2 | | |
| 43 | Strahlungsheizungselement 3 | | |
| 5 | konvektiver, elektrischer Gasheizer | | |
| 51 | konvektiver, elektrischer Gasheizer 1 | | |
| 52 | konvektiver, elektrischer Gasheizer 2 | | |
| 6 | Wärmeübertrager | | |
| 61 | Wärmeübertrager 1 | | |
| 62 | Wärmeübertrager 2 | | |
| 63 | Wärmeübertrager 3 | | |

## Patentansprüche

1. Festoxidzellenanordnung (1) mit:
- einem Gehäuse (2), wobei das Gehäuse (2) eine Bodenplatte, eine Abdeckung und Seitenwände aufweist;
- Festoxidzellstapeln (3), wobei sich die Festoxidzellstapel (3) auf der Bodenplatte befinden;
**dadurch gekennzeichnet, dass**
- wenigstens ein Strahlungsheizungselement (4) innerhalb des Gehäuses (2) und Strahlungswärme auf die Festoxidzellstapel (3) abgebend angeordnet ist, und
- das Strahlungsheizungselement (4) als Heizrohr oder als Heizplatte ausgebildet ist, und
- das Strahlungsheizungselement (4) aus mehreren separat regelbaren Segmenten mit separaten Leistungsanschlüssen für die jeweiligen Strahlungsheizungssegmente besteht und dass die Festoxidzellenanordnung als Hochtemperaturelektrolysezellenanordnung (SOEC) ausgebildet ist.

2. Festoxidzellenanordnung (1) nach Anspruch 1,
**dadurch gekennzeichnet, dass**
die Festoxidzellstapel (3) in mehreren Reihen nebeneinander als Festoxidzellstapelreihenschaltung vorliegen, wobei für jeden Festoxidzellstapel (3) ein Strahlungsheizungselement (4) zugeordnet ist.

3. Festoxidzellenanordnung (1) nach einem der vorangehenden Ansprüche,
**dadurch gekennzeichnet, dass**
zusätzlich zu den Strahlungsheizungselementen (4) Wärmeübertrager (6) im Gehäuse (2) oder außerhalb direkt an den Flanschen angeordnet sind.

4. Festoxidzellenanordnung (1) nach Anspruch 3,
**dadurch gekennzeichnet, dass**
sich durch die Kombination von Strahlungsheizungselement (4) mit Wärmeübertrager (6) der Systemwirkungsgrad erhöht.

5. Festoxidzellenanordnung (1) nach einem der Ansprüche 1 bis 4, **dadurch gekennzeichnet, dass** das Strahlungsheizelement (4) als Heizrohr oder als Heizplatte in eine der Seitenwände integriert ist.

6. Festoxidzellenanordnung (1) nach Anspruch 1 bis 4, **dadurch gekennzeichnet, dass** das Strahlungsheizelement (4) als Heizrohr oder als Heizplatte hängend von oben, an Seitenwänden oder stehend auf der Bodenplatte befestigt ist.

7. Festoxidzellenanordnung (1) nach Anspruch 1 bis 4, **dadurch gekennzeichnet, dass** das Strahlungsheizelement (4) als Heizrohr oder als Heizplatte in eine oder mehrere keramische Platten integriert ist.

## Claims

1. A solid oxide cell assembly (1) comprising:
- a housing (2), wherein the housing (2) comprises a bottom plate, a cover and side walls;
- solid oxide cell stacks (3), wherein the solid oxide cell stacks (3) are located on the bottom plate;
**characterised in that**
- at least one radiant heating element (4) is arranged inside the housing (2) and radiating heat onto the solid oxide cell stacks (3), and
- the radiant heating element (4) is designed as a heating tube or as a heating plate, and
- the radiant heating element (4) consists of a plurality of separately controllable segments with separate power connections for the respective radiant heating segments and that the solid oxide cell arrangement is designed as a high-temperature electrolytic cell arrangement (SOEC).

2. Solid oxide cell arrangement (1) according to claim 1,
**characterised in that**
the solid oxide cell stacks (3) are present in a plurality of rows next to one another as a solid oxide cell stack row arrangement, a radiation heating element (4) being assigned for each solid oxide cell stack (3).

3. Solid oxide cell arrangement (1) according to one of the preceding claims,
**characterised in that**
in addition to the radiant heating elements (4), heat exchangers (6) are arranged in the housing (2) or outside directly on the flanges.

4. Solid oxide cell arrangement (1) according to claim 3,
**characterised in that**
the system efficiency is increased by the combination of radiant heating element (4) with heat exchanger (6).

5. Solid oxide cell arrangement (1) according to one of claims 1 to 4, **characterised in that** the radiant heating element (4) is integrated as a heating tube or as a heating plate in one of the side walls.

6. Solid oxide cell arrangement (1) according to claim 1 to 4, **characterised in that** the radiant heating element (4) is attached as a heating tube or as a heating plate suspended from above, on side walls or upright on the base plate.

7. Solid oxide cell arrangement (1) according to claim 1 to 4, **characterised in that** the radiant heating element (4) is integrated as a heating tube or as a heating plate in one or more ceramic plates.

## Revendications

1. Agencement de piles à oxyde solide (1) comprenant :
- un boîtier (2), dans lequel le boîtier (2) présente une plaque de fond, un recouvrement et des parois latérales ;
- des empilements de piles à oxyde solide (3), dans lequel les empilements de piles à oxyde solide (3) se situent sur la plaque de fond ;
**caractérisé en ce que**
- au moins un élément de chauffage par rayonnement (4) est disposé à l'intérieur du boîtier (2) et de façon à délivrer de la chaleur par rayonnement à l'empilement de piles à oxyde solide, et
- l'élément de chauffage par rayonnement (4) est conçu comme un tube chauffant ou comme une plaque chauffante, et
- l'élément de chauffage par rayonnement (4) est constitué de plusieurs segments aptes à être réglés séparément, avec des bornes d'alimentation séparées pour les différents segments de chauffage par rayonnement, et **en ce que** l'agencement de piles à oxyde solide est conçu comme une pile électrolytique haute température (SOEC).

2. Agencement de piles à oxyde solide (1) selon la revendication 1,
**caractérisé en ce que**
les empilements de piles à oxyde solide (3) se présentent en plusieurs rangées côte à côte en tant que montage en série d'empilements de piles à oxyde solide, dans lequel un élément de chauffage par rayonnement (4) est associé à chaque empilements de piles à oxyde solide (3).

3. Agencement de piles à oxyde solide (1) selon l'une des revendications précédentes,
**caractérisé en ce que**
en plus des éléments de chauffage par rayonnement (4), des échangeurs de chaleur (6) sont disposés dans le boîtier (2) ou à l'extérieur directement sur les brides.

4. Agencement de piles à oxyde solide (1) selon la revendication 3,
**caractérisé en ce que**
le degré d'efficacité du système est augmenté par la combinaison d'éléments de chauffage par rayonnement (4) avec des échangeurs de chaleur (6).

5. Agencement de piles à oxyde solide (1) selon l'une des revendications 1 à 4, **caractérisé en ce que** l'élément de chauffage par rayonnement (4) est intégré en tant que tube chauffant ou plaque chauffante dans l'une des parois latérales.

6. Agencement de piles à oxyde solide (1) selon la revendication 1 à 4, **caractérisé en ce que** l'élément de chauffage par rayonnement (4) est fixé en tant que tube chauffant ou plaque chauffante suspendue par le haut à des parois latérales ou debout sur la plaque de fond.

7. Agencement de piles à oxyde solide (1) selon la revendication 1 à 4, **caractérisé en ce que** l'élément de chauffage par rayonnement (4) est intégré en tant que tube chauffant ou plaque chauffante dans une ou plusieurs plaques céramiques.
